**Europäisches Patentamt**

**European Patent Office**

**Office européen des brevets**

(11) Veröffentlichungsnummer: **0 225 475**
**B1**

(12) **EUROPÄISCHE PATENTSCHRIFT**

(45) Veröffentlichungstag der Patentschrift:
**01.03.89**

(21) Anmeldenummer: **86115162.9**

(22) Anmeldetag: **31.10.86**

(51) Int. Cl.⁴: **B01D 53/08, B01D 46/32**

(54) **Einrichtung zum gesteuerten Abzug von fliessfähigem Schüttgut an der Unterseite einer Schüttgutsäule, insbesondere eines Wanderbettfilters.**

(30) Priorität: **09.11.85 DE 3539829**
**09.04.86 DE 3611953**
**20.08.86 DE 3628205**

(43) Veröffentlichungstag der Anmeldung:
**16.06.87 Patentblatt 87/25**

(45) Bekanntmachung des Hinweises auf die Patenterteilung:
**01.03.89 Patentblatt 89/9**

(84) Benannte Vertragsstaaten:
**AT BE CH DE ES FR GB IT LI NL SE**

(56) Entgegenhaltungen:
**DE-A- 3 406 413**
**FR-A- 847 768**
**GB-A- 2 116 869**
**GB-A- 2 116 870**

(73) Patentinhaber: **Siemens Aktiengesellschaft, Berlin und München Wittelsbacherplatz 2, D-8000 München 2(DE)**

(72) Erfinder: **Mathewes, Wolfgang, Dipl.-Ing., Nelkenweg 75, D-6300 Giessen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung zum gesteuerten, möglichst planparallelen Abzug von fließfähigem Schüttgut an der Unterseite einer in einem Behälter enthaltenen Schüttgutsäule, insbesondere bei einem Wanderbettfilter, gemäß Oberbegriff des Anspruchs 1.

Ein besonderes Problem bei einer solchen gattungsgemäßen Einrichtung besteht darin, einen planparallelen Abzug des Schüttgutes bzw. der Filtermasse zu erreichen, ohne daß sich bevorzugte Durchströmungszonen für die von unten einströmenden Gase oder Dämpfe mit Hohlräumen im unteren Bereich der Schüttgutsäule bzw. des Wanderbettfilters ausbilden können. Ein weiteres Problem besteht darin, die Einrichtung so zu gestalten, daß ein dosiertes, den planparallelen Abzug der Filtermasse nach Art einer Kolbenströmung bewirkendes Abrieseln herbeigeführt wird, ohne daß Verklemmungen der Durchsetzstellorgane der Unterseite der Schüttgutsäule oder besondere aufwendige Abdichtmaßnahmen getroffen werden müßten.

Wanderbettfilter zur Reinigung von gas- oder dampfförmigen Medien, auf welche sich die Erfindung vorzugsweise bezieht, sind insbesondere Adsorptionsfilter in Form von sogenannten Aktivkohlefiltern, welche bei der Abluftreinigung in kerntechnischen Anlagen, wie kerntechnischen Labors oder Kernkraftwerken, eine besondere Rolle spielen, siehe dazu z.B. DE-C 2 625 275. Es geht dabei vor allem um die Ausfilterung von radioaktivem Jod und die Abscheidung von gasförmigen Kohlenwasserstoffen aus der Abluft von Gebäuden, wobei die Aktivkohlefilter mit Schwebstoff-Filtern zusammenarbeiten. Bei Aktivkohlefiltern wird die Schüttgutsäule von dem Filterbett der Aktivkohlekörper gebildet. Die Aktivkohlekörper können z.B. aus stranggepreßter Kohle hergestellte zylindrische Körper von 1 bis 2 mm Durchmesser und 1,2 bis 2 mm Länge sein, sie können auch aus sogenanntem Bruchkorn mit einer Körnung von 1 bis 2 mm bestehen. Die Aktivkohlefilter werden auch als "Jod-Sorptionsfilter Typ Wanderbettfilter" bezeichnet.

Durch die DE-A 3 406 413 ist eine gattungsgemäße Einrichtung bekannt, mit welcher versucht worden ist, der vorstehend aufgezeigten Problematik Rechnung zu tragen, jedoch hat sich gezeigt, daß die dachförmigen Fließleitkörper-Anordnungen, deren Seitenflanken in rinnenförmige Abriesel-Mündungen am Grunde der Schüttgutschicht auslaufen, einem homogenen Durchströmen der Schüttgutsäule von unten nach oben durch die zu reinigenden Gase oder Dämpfe nicht zuträglich sind. Weiterhin hat sich gezeigt, daß der mit seinen in den Gitterkammern befindlichen Schüttgut-Depots hin- und herbewegte Gitterrost im Bereich der Abriesel-Mündungen zu einer zusätzlichen Scher-Beanspruchung der Aktivkohlekörper führt.

Die aufgezeigten Nachteile treffen auch zu auf die bekannte Einrichtung nach der niederländischen Auslegeschrift Nr. 99 697.

Der Erfindung liegt die Aufgabe zugrunde, eine Einrichtung der im Oberbegriff des Anspruchs 1 definierten Art zu schaffen, durch welche es im Sinne der Überwindung der aufgezeigten Probleme ermöglicht ist,
- eine genaue Steuerung des Schüttgut-Abrieselns an der Unterseite der Schüttgutsäule im allgemeinen und der Filtermasse im besonderen unter Ermöglichung einer "Kolbenströmung" zu erreichen;
- bevorzugte Durchströmungszonen mit Hohlräumen an der Unterseite der Schüttgutsäule zu vermeiden, wodurch auch unterschiedliche Beladungen der in den Hohlräumen aufgewirbelten Schüttgutpartikel bzw. Filtermasseteilchen und der angrenzenden Filter- oder Schüttgutzonen vermieden ist;
- eine robuste und trotzdem präzise und genau dosierbar arbeitende Durchsatzstellanordnung für die Einrichtung zu schaffen.

Erfindungsgemäß wird die gestellte Aufgabe bei einer gattungsgemäßen Einrichtung durch die im Kennzeichen des Anspruchs 1 angegebenen Merkmale gelöst. Vorteilhafte Weiterbildungen sind in den Ansprüchen 2 bis 17 angegeben.

Die mit der Erfindung erzielbaren Vorteile sind vor allem in Folgendem zu sehen:

1) Die Luftgeschwindigkeit oder allgemein die Geschwindigkeit der von unten einzuleitenden Gase oder Dämpfe kann im Vergleich zu einem Wanderbettfilter mit dachförmigen Leiteinrichtungen gesteigert werden. Es wurden Werte von 0,4 m/s im Vergleich zur bisherigen Luftgeschwindigkeit von etwa 0,3 m/s gemessen. Durch die verbesserte Lufteinbringung bzw. allgemein Einleitung der Gase oder Dämpfe erfolgt eine Hohlraumbildung innerhalb der Schüttgutsäule bzw. des Aktivkohle-Adsorberbettes erst ab Geschwindigkeitswerten, die größer als 0,45 m/s sind. Daher kann der Adsorber-Grundriß bei gegebener Filterleistung kleiner dimensioniert werden.

2) Es kann sich eine bevorzugte Luft- bzw. Gasströmung im Aktivkohlebett nicht ausbilden, da die Schüttgutsäulenunterseite durch flache Rost- bzw. Gitterkonstruktionen unterstützt wird und von diesen flachen Konstruktionen zur Oberseite der Schüttgutsäule alle senkrechten Wege gleich lang sind. Wegen des Wegfalls der dachförmigen Leiteinrichtungen im unteren Bereich der Schüttgutsäule können sich auch keine sogenannten Kontaminationswellen in der Schüttgutsäule im allgemeinen und in der Aktivkohlekörperschicht im besonderen ausbilden.

3) Die Schüttgut-(bzw. Aktivkohle-)Entnahme mit Hilfe der erfindungsgemäßen Einrichtung erfolgt planparallel, weil
a) es sich um eine Volumenentnahme handelt mit definierten Schüttgut-Depots; ein freies Durchrieseln ist nicht möglich;
b) keine verschieden lange Wege einzelner Kohlekörner oder -körper während des Abzugsvorganges im Aktivkohlebett (bzw. allgemein im Filterbett) vorhanden sind. Es ist praktisch nur eine senkrechte Fließrichtung, aber keine Querbewegung der Aktivkohlekörner möglich.

4) Es sind relativ geringe Reibungskräfte bei der Steuerrostbewegung zu verzeichnen, da nur eine Reibung zwischen den Rostoberflächen, also metallischen Oberflächen, und den Kohlekörpern stattfindet.

5) Die Steuerroste werden bevorzugt aus Edelstahlblechen einer Stärke von etwa 1 mm gefertigt, welche zusätzlich zu den Durchlaßöffnungen noch mit gleichmäßig verteilten kleineren Löchern, die gasdurchlässig, aber teilchenundurchlässig sind, versehen sind. Auch der Gitterrost wird bevorzugt aus Edelstahlblechen gefertigt. Das Gleiche trifft für den Leitrost an der Unterseite der Schüttgutsäule zu, sofern ein solcher Verwendung findet. Wird er verwendet, dann wird zweckmäßigerweise ein Abstandszwischenraum zwischen der Unterseite des Leitrostes und der Oberseite des oberen Steuerrostes belassen, welcher etwa eine halbe bis zu mehreren Korngrößen betragen kann und welcher zu einer gleichmäßigen Luftverteilung und -einleitung beiträgt.

6) Ganz allgemein muß der relativ geringe Strömungswiderstand der Einrichtung im Bezug auf die von unten einzuleitenden Gase oder Dämpfe hervorgehoben werden, welcher einen geringen Druckverlust ergibt und die vorstehend unter Ziffer 1) erwähnten hohen "Luftgeschwindigkeiten" ermöglicht.

Im folgenden wird die Erfindung anhand der Zeichnung, in der mehrere Ausführungsbeispiele dargestellt sind, noch näher erläutert.

In der Zeichnung zeigt in teilweise schematischer Darstellung, unter Fortlassung der für das Verständnis der Erfindung nicht erforderlichen Teile:

Fig. 1 in einem Aufriß-Schnittbild in schematischer Gesamtdarstellung eine Einrichtung nach der Erfindung in der Ausführung als Jod-Sorptionsfilter für Kernkraftanlagen mit Aktivkohle-Körpern als Filtermasse, wobei oberhalb der Anordnung "1. Steuerrost – Gitterrost – 2. Steuerrost" ein Leitrost vorgesehen ist;

Fig. 2 im Ausschnitt ein zweites Ausführungsbeispiel für die Anordnung "1. Steuerrost – Gitterrost – 2. – Steuerrost" mit einem Leitrost an der Oberseite und einem Traggitter an der Unterseite, wobei Fig. 2 die eine Endposition A der beiden Steuerroste in Bezug auf den zwischen ihnen befindlichen Gitterrost zeigt;

Fig. 3 den Gegenstand nach Fig. 2, jedoch in der End-Position B seiner beiden Steuerroste, welche im Vergleich zu Position A nach Fig. 2 sich um die Hubstrecke nach rechts verschoben haben;

Fig. 4 in Draufsicht und im Ausschnitt den oberen und den unteren Steuerrost sowie den Leitrost, wobei zwei Ausführungen für die Durchlaßöffnungen (Rund- und Rechtecköffnungen) gezeigt sind;

Fig. 5 eine Ausführung der Einrichtung, grundsätzlich so wie in Fig. 2 bis 4 dargestellt, jedoch mit dem Unterschied, daß anstelle des Leitrostes an der Schüttgutsäulenunterseite nun ein Leitgitter mit hochkantstehenden Gitterleisten vorgesehen ist;

Fig. 6 ein viertes Ausführungsbeispiel der Einrichtung, welches grundsätzlich so ausgebildet ist wie dasjenige nach Fig. 5, jedoch mit dem Unterschied, daß zwischen Gitterkammern einer ersten und zweiten Gruppe noch Zwischen-Gitterkammern eingefügt sind;

Fig. 7 im Ausschnitt der Fig. 6 eine im Vergleich zu der Endposition A nach dieser Fig. 6 etwas in Hubrichtung verschobene Position der beiden Steuerroste (Position A–B1);

Fig. 8 eine noch weiter in Richtung auf die andere Endposition B verschobene Zwischenpostion A–B2 der beiden Steuerroste nach Fig. 6;

Fig. 9 in einem Teilquerschnitt und in einem zugehörigen Teilgrundriß ein fünftes Ausführungsbeispiel der Einrichtung mit Steuerrosten in besonders biegesteifer Sandwich-Bauweise und mit schlitzförmigen Durchlaßöffnungen, wobei auch hier Zwischen-Gitterkammern so wie beim vierten Ausführungsbeispiel nach Fig. 6 bis 8 vorgesehen sind und wobei das linke, der Behälterwand benachbarte Ende der Einrichtung dargestellt ist;

Fig. 10 den Gegenstand nach Fig. 9, wobei jedoch das rechte, der rechten Behälterwand benachbarte Ende der Einrichtung dargestellt ist und jeder der beiden Steuerroste mit je einem Schubbolzen gekoppelt ist;

Fig. 11 in einer stark vereinfachten Gesamtansicht den Gegenstand nach Fig. 9 und 10 mit dem gesamten Behälter für das Wanderbettfilter, d.h. auch einschließlich des unterhalb der Einrichtung angeordneten Abzugtrichters für die Filtermasse, der Schüttgutschicht und einer in den Behälterraum oberhalb der Schüttgutschicht einmündenden Aktivkohle-Befülleinrichtung, wobei jedoch der Antrieb für die Steuerroste abgewandelt ist;

Fig. 12 perspektivisch den oberen und unteren Steuerrost;

Fig. 13 eine Teilansicht auf den oberen und unteren Steuerrost, welcher in den Behälter eingebaut ist und den feststehenden Gitterrost umgreift;

Fig. 14 perspektivisch im Ausschnitt den Gitterrost;

Fig. 15 im Aufriß die Gesamtansicht der Einrichtung nach dem Ausführungsbeispiel der Figuren 6 bis 8 in einer konstruktiv durchgebildeten Ausführung;

Fig. 16 die Teilansicht auf diejenige Stirnseite der Einrichtung nach Fig. 15, wo die Betätigungsstange angeordnet ist;

Fig. 17 einen Teilschnitt XVII–XVII aus Fig. 16, d.h. die Verbindung der Steuerroste mit einem Schubbolzen und dessen Lagerung;

Fig. 18 die Einzelheit XVIII aus Fig. 16, d.h. ein Richtgesperre für die Schubkurbel;

Fig. 19 den Schnitt XIX–XIX aus Fig. 18, welcher eine Draufsicht auf das Richtgesperre zeigt, und

Fig. 20 den Gegenstand nach Fig. 1, verkleinert, in der anderen Endposition seiner beiden Steuerroste.

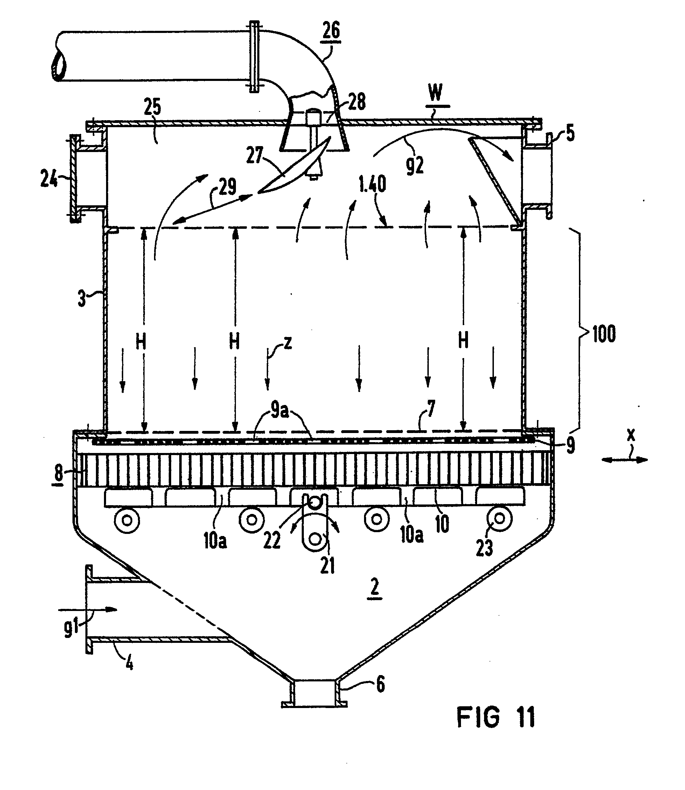

Die erste Figur zeigt schematisch in einem Aufriß-Schnittbild die Einrichtung nach der Erfindung zum gesteuerten, möglichst planparallelen Abzug von fließfähigem Schüttgut 1 an der Unterseite 2 einer in einem Behälter 3 enthaltenen Schüttgutsäule 100. Die dargestellte Einrichtung gehört insbesondere zu einem Wanderbettfilter zum Ablassen verbrauchter Filtermasse 1.0 (abrieselnde Masse) und 1.1 (unterste Schicht der Schüttgutsäule 100). Im folgenden wird die Schüttgutsäule 100 vereinfachend als Filterbett bezeichnet, damit eine einheitliche Ausdrucksweise gegeben ist. Das als Ganzes mit W bezeichnete Wanderbettfilter dient zur Reinigung von gas- oder dampfförmigen Medien. Dabei kann es sich im bevorzugten Anwendungsfall um die Abluft von kerntechnischen Anlagen handeln, die, bevor sie zum Abluftkamin strömen, entsprechend gereinigt werden müssen, wobei es hier insbesondere um die Rückhaltung des sogenannten Radiojods ankommt, deshalb auch die Bezeichnung "Jod-Sorptionsfilter Typ Wanderbettfilter". Die durch den Einlaßstutzen 4 zuströmenden Gase oder Dämpfe sind mit g1 (Pfeil) bezeichnet, sie durchströmen das Filterbett 100 von unten nach oben im Gegenstrom zur Fließrichtung des Schüttguts 1, wobei die in den Gasen oder Dämpfen enthaltenen Verunreinigungen von dem Schüttgut 1 (insbesondere Aktivkohlekörner) adsorbiert werden. Die gereinigten Gase oder Dämpfe verlassen den Behälter 3 gemäß Strömungspfeil g2 durch den Auslaßstutzen 5. Der Behälter 3 mit einer Wandung aus nichtrostendem Stahl hat insbesondere einen Rechteckquerschnitt; an seinem unteren Ende ist er konisch bzw. pyramidenstumpfförmig verjüngt und läuft in einen Auslaßstutzen 6 für das Schüttgut 1 aus. Diesem können nicht dargestellte Durchlaßstellorgane zugeordnet sein, ebenso wie der Oberseite des Filterbettes geeignete Schüttgutverteileinrichtungen (in Fig. 11 dargestellt) zugeordnet sein können. Entsprechend der Beladung mit den zurückzuhaltenden Stoffen ist das Filterbett in Schichten mit verschieden starker Punktierung und mit durch Stricheln angedeuteten Schichtgrenzen gezeichnet. Die unterste Schicht 1.1 ist am meisten beladen, die darüber angeordnete 1.2 etwas weniger, die Schicht 1.3 noch weniger und die oberste Schicht 1.4 ist eine Lage frischen Schüttguts, das praktisch noch nicht beladen ist. Intermittierend wird nun jeweils die unterste Schicht 1.1 abgerieselt und durch eine frische Lage an der Oberseite des Filterbettes 100 aufgefüllt, so daß die Höhe des Filterbettes 100 und damit die Filterqualität unverändert bleiben.

Zur Abstützung des Filterbettes 100 ist an dessen Unterseite ein im wesentlichen ebener Leitrost 7 in Form eines Lochbleches oder dergleichen angeordnet, der gewissermassen die untere Begrenzungsfläche oder -linie der untersten Schicht 1.1 bildet. Seine über die Grundfläche des Filterbettes 100 verteilten Öffnungen dienen zum Abrieseln des Schüttgutes 1 einerseits und zum Einlassen der von unten zuströmenden gas- oder dampfförmigen Medien g1 andererseits. Mit Abstandszwischenraum a1 zum Leitrost 7 ist unterhalb des Leitrostes 7 ein stationärer Gitterrost 8 angeordnet, bestehend aus einander kreuzenden Hochkant-Gitterstäben 8.1 (Längsstäbe) und 8.2 (Querstäbe) nach Art eines Lichtgitterrostes. Durch die einander kreuzenden Gitterstäbe 8.1, 8.2 ergeben sich jeweils kleine Gitterkammern von rechteckigem oder quadratischem Grundriß. Es werden Gitterkammern 80 einer ersten Gruppe 8a und einer zweiten Gruppe 8b gebildet.

An der Oberseite des Gitterrostes 8 ist nun in dem Abstandszwischenraum a1 zwischen diesem Gitterrost 8 und der Unterseite des Filterbettes 100 ein die Grundfläche von Leit- und Gitterrost 7, 8 überdeckender, in Horizontalrichtung x verschiebbar gelagerter erster Steuerrost 9 angeordnet, welcher mit der Gitterrostteilung entsprechenden, einander abwechselnden Durchlaßöffnungen 9a und Absperrfeldern 9b versehen ist.

An der Unterseite des Gitterrostes 8 ist ein zweiter, ebenfalls horizontal verschiebbar gelagerter Steuerrost 10 angeordnet, dessen Durchlaßöffnungen 10a und Absperrfelder 10b in bezug auf diejenigen des ersten Steuerrostes 9, wie ersichtlich, so angeordnet und horizontal steuerbar sind, daß die erste Gruppe 8a der Gitterkammern 80 des Gitterrostes über die Durchlaßöffnungen 9a des ersten Steuerrostes 9 mit Schüttgut 1 gefüllt und an ihrer Unterseite von den Absperrfeldern 10b des zweiten Steuerrostes 10 gegen Abrieseln ihrer Schütt-Depots abgesperrt sind, dagegen die der ersten Gruppe 8a von Gitterkammern 80 jeweils benachbarte zweite Gruppe 8b von Gitterkammern 80 mittels der Absperrfelder 9b des ersten Steuerrostes 9 gegen Aufnahme von Schüttgut 1 abgedeckt und von den Durchlaßöffnungen 10a des zweiten Steuerrostes 10 zum Entleeren ihres Schüttgut-Depots freigegeben sind, und umgekehrt.

Man kann nun dem ersten und dem zweiten Steuerrost 9, 10 je eine Verstelleinrichtung zuordnen und so die beiden Steuerroste unabhängig voneinander in einer ganz bestimmten Zuordnung und Folge steuern, so daß sich die einander benachbarten Gruppen 8a, 8b von Gitterkammern 80 abwechselnd füllen und entleeren. Besonders vorteilhaft ist es jedoch, wenn man beide Steuerroste 9, 10 so, wie dargestellt, versetzt gegeneinander anordnet, miteinander starr koppelt und dann durch eine Antriebseinrichtung AE im Sinne des Pfeiles x hin- und hergehend bewegt. Dadurch ergibt sich ein besonders einfacher Aufbau mit einer robusten Steuerung. In diesem Fall liegen nun in der durch die Fließrichtung z des Schüttgutes 1 gegebenen Projektionsrichtung gesehen die Absperrfelder 9b des ersten Steuerrostes 9 im Flächenbereich der Durchlaßöffnungen 10a des zweiten Steuerrostes 10 und dementsprechend die Durchlaßöffnungen 9a des ersten Steuerrostes 9 im Flächenbereich der Abdsperrfelder 10b des zweiten Steuerrostes 10. In dieser Relation sind der erste und der zweite Steuerrost 9, 10 miteinander starr gekoppelt und gemeinsam in der Horizontalrichtung x hin- und herbewegbar gelagert, so daß die einander benachbarten ersten und zweiten Gruppen 8a, 8b von Gitterkammern 80 bei Horizontalbewegung des Doppelsteuerrostes 9, 10 abwechselnd entweder mit Schüttgut 1 von oben gefüllt oder von Schüttgut bzw. Schüttgut-Depots 11 nach unten entleert werden.

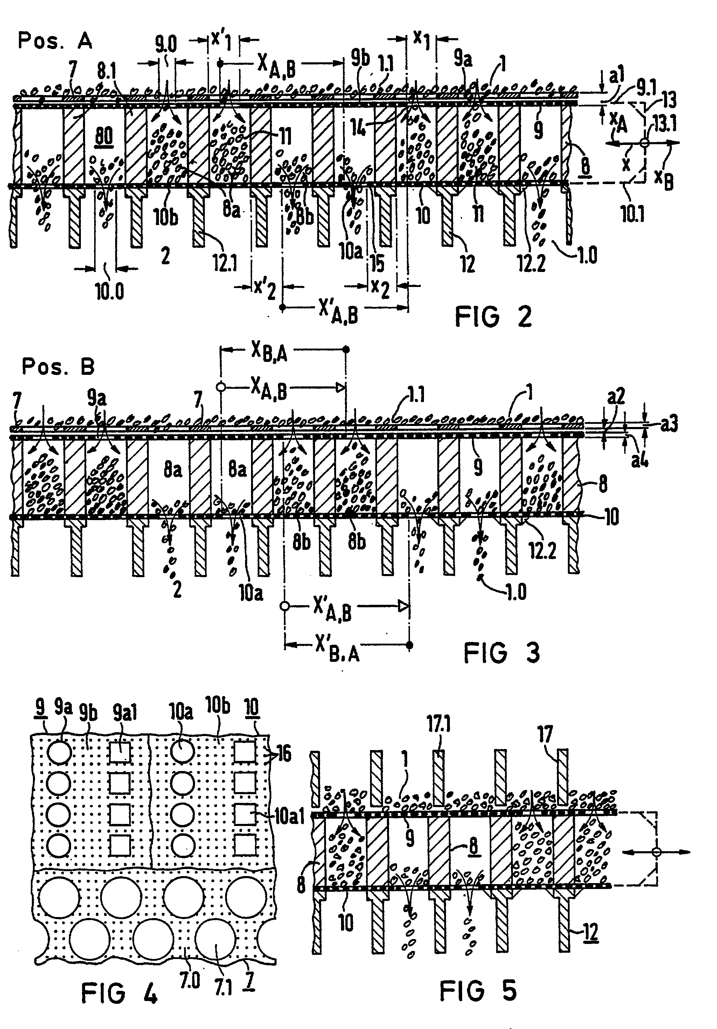

Die Bleche für die Steuerroste 9, 10 und die Gitterstäbe 8.1, 8.2 des Gitterrostes 8 sowie für den Leitrost 7 bestehen bevorzugt aus nichtrostendem Stahl. Abgesehen von ihren Öffnungen 9a, 10a und 7 (vergleiche Fig. 4) sind die Bleche für die Steuer- und Leitroste 9, 10, 7 teilchen-undurchlässig, jedoch aufgrund einer Perforation 16, 7.0 gasdurchlässig. Die Antriebseinrichtung AE für die Steuerroste 9, 10 weist zwei mit je einem Steuerrost 9, 10 verbundene, dichtend durch die Behälterseitenwand 3.1 hindurchgeführte Schubbolzen 18.1, 18.2 auf, welche über eine Traverse 13 mit Schubstange 18 an die Antriebskurbel 21 bei 21.0 angelenkt sind. Die Antriebskurbel ist an einem gehäusefesten Schwenklager 210 gelagert.

PE ist eine Probennahme-Einrichtung mit konisch verjüngter Entnahmeschnecke pe 1, welche im Schneckengehäuse pe 2 abgedichtet und drehbar gelagert ist und durch eine Austragsöffnung pe 3 in das Filterbett 100 ragt. Bei Drehung der Kurbel pe 4 wird Filtermasse in kleiner Menge abgezogen und durch das Entnahmerohr pe 5 in einen nicht dargestellten Probennahme-Behälter gefördert. Dadurch kann der Beladezustand der Filtermasse kontrolliert werden.

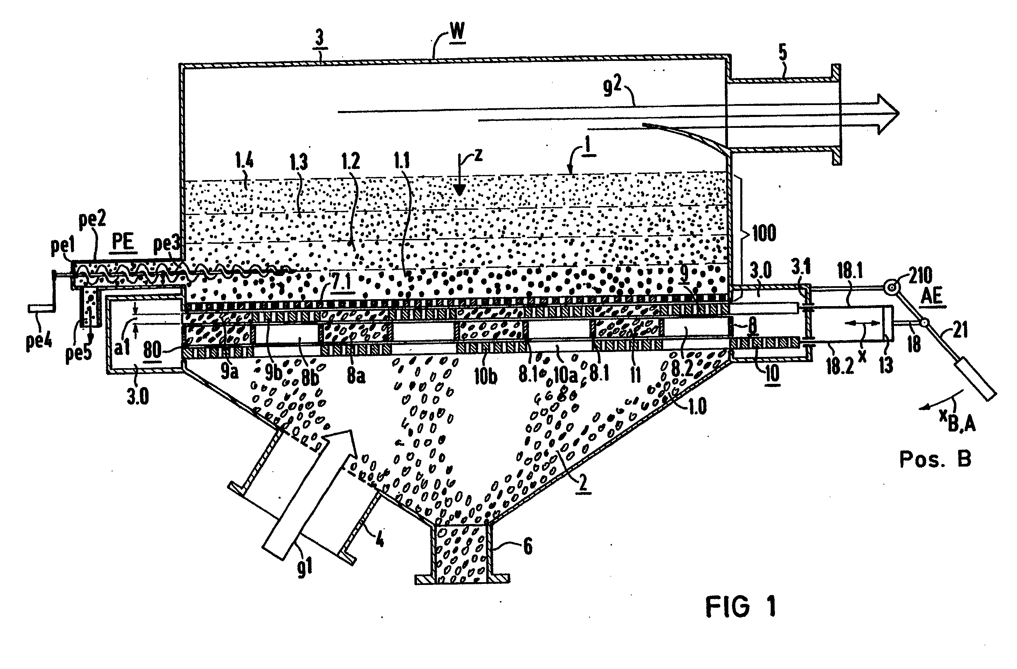

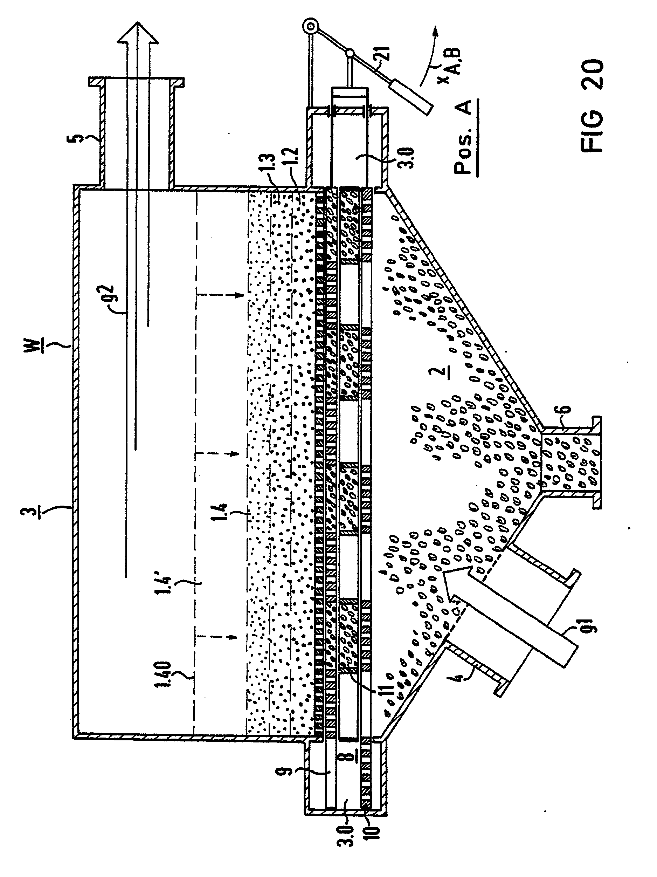

Die seitlichen Gehäusetaschen 3.0 bilden Freiräume, welche das Hin- und Her-Bewegen der Steuerroste 9, 10 (vergleiche auch Fig. 20) in Richtung x gestatten. Wenn man die Lage der Steuerroste 9, 10 in Fig. 1 mit "Position B" bezeichnet, dann sind sie gemäß Fig. 20 um den Hub $x_{B, A}$ in die andere Endposition A verschoben worden, und zwar durch Verschwenken der Antriebskurbel 21 in Uhrzeigerrichtung. Aus Position A gelangen die Steuerroste 9, 10 wieder in Position B (Fig. 1), wenn man die Antriebskurbel in Gegenzeigerrichtung zur Erzeugung des Hubes $x_{A, B}$ verschwenkt. Aus Fig. 20 geht weiter hervor, daß die in Fig. 1 gefüllte erste Gruppe 8a der Gitterkammern 80 zur zweiten Gruppe 8b geworden und deshalb von ihren Schüttgutdepots 11 entleert worden ist. Die in Fig. 1 unterste Schicht 1.1 ist gemäß Fig. 20 stattdessen in die erste Gruppe 8a von Gitterkammern 80 gelangt, die übrigen Schichten 1.2, 1.3 und 1.4 sind nachgerutscht, und der mit 1.4' bezeichnete (ursprünglich von der Schicht 1.4 eingenommene) Raum muß durch neue Aktivkohle bis zur Niveaulinie 1.40 nachgefüllt werden. Die hierzu erforderliche Befülleinrichtung ist in Fig. 1 und 20 nicht dargestellt, jedoch in einer geeigneten Ausführung 26 aus Fig. 11 erkennbar.

Aus Fig. 2 erkennt man deutlicher als aus Fig. 1 den Leitrost 7, welcher in Fig. 4 im Grundrißausschnitt dargestellt ist mit einem Feld gleichmäßig verteilter grosser kreisförmiger Abrieselöffnungen 7.1 und den kleinen durch Punktierung angedeu-teten luftdurchlässigen, aber teilchen-undurchläs-sigen Öffnungen 7.0. Die Gitterkammern allgemein sind in Fig. 2 und in den Folgefiguren mit 80 bezeichnet. Der Abstand a1 ist, wie gesagt, derjenige zwischen der Unterseite des Filterbettes 100 und der Oberseite des Gitterrostes 8. Es gilt: a1 = a2 + a3 + a4, wobei a3 = Leitrost-Wandstärke, a4 = Steuerrost-Wandstärke und a2 = Spiel bzw. Luftspalt zwischen den Teilen 9 und 7 bedeutet. Der Luftspalt a2 kann ein bis mehrere Millimeter betragen, d.h. bis zu ein oder mehreren Korngrößen, wobei man den Luftspalt a2 wegen der Bauhöhe des Behälters eher kleiner als größer machen wird. Der zweite (untere) Steuerrost 10 ist zusammen mit den auf ihm befindlichen Schüttgut-Depots 11 auf einem Traggitter 12 abgestützt und an diesem in Hubrichtung x geführt. Dies ist die Hauptrichtung; der nach rechts gehende Richtungspfeil ist $x_B$, und der nach links gehende Richtungspfeil ist $x_A$ bezeichnet. Schematisch ist angedeutet, daß die Steuerrostverlängerungen 9.1 bzw. 10.1 mit einer Traverse starr verbunden sind, an deren Kraftangriffspunkt 13.1 ein Schubgestänge angreifen kann, wie bereits anhand von Fig. 1 erläutert.

Die Teilung der einzelnen Gitterstäbe 12.1 des Traggitters 12 in Hubrichtung x entspricht derjenigen der Teilung der einzelnen Gitterstäbe 8.1 des Gitterrostes 8. Die Steuerroste 9, 10 bestehen vorzugsweise aus Edelstahlblech einer Stärke von 1 bis 2 mm; ihre Durchlaßöffnungen 9a und 10a und ihre Absperrfelder 9b und 10b stehen in einer ganz bestimmten Relation zur Teilung des Gitterrostes 8 und des Traggitters 12, wie man es aus Fig. 1 und Fig. 2 erkennen kann. Der erste Steuerrost 9 ist mit dem auf ihm befindlichen Schüttgut 1 auf dem stationären Gitterrost 8 abgestützt und an diesem in Hubrichtung x geführt. Es ergibt sich somit für beide Steuerroste 9, 10 ein Feld von zahlreichen Abstützlinien oder Abstützpunkten und eine präzise Führung in Hubrichtung x.

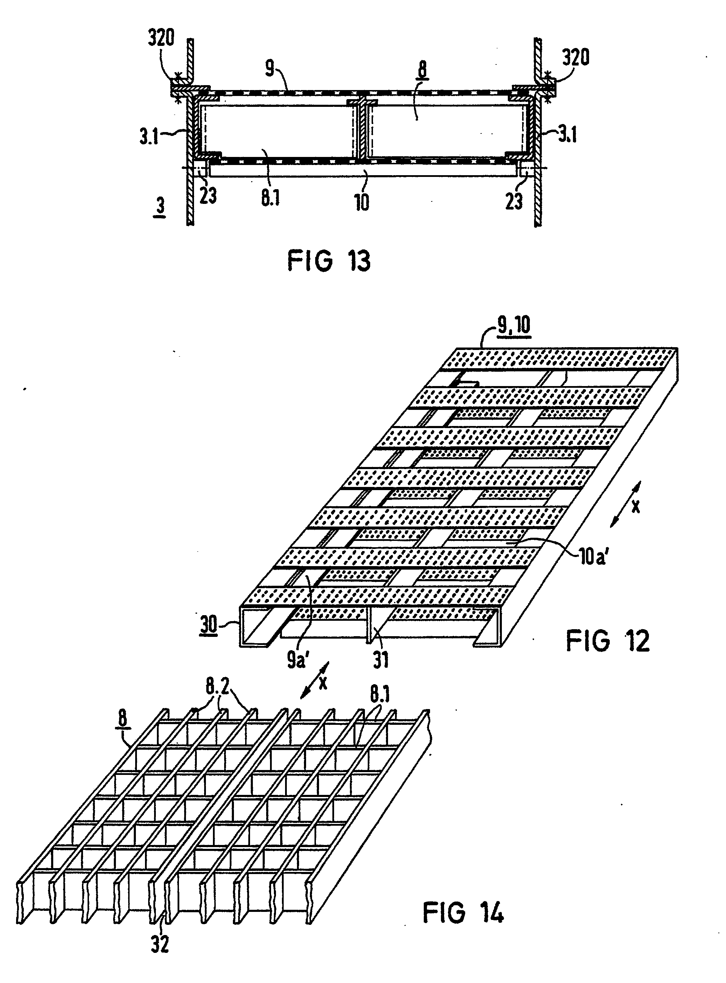

Der stationäre Gitterrost 8 mit seinen quer zur Hubrichtung x verlaufenden Gitterstäben 8.1 (die quer dazu in Hubrichtung verlaufenden Gitterstäbe sind in Fig. 2 bis 4 nicht dargestellt) kann grundsätzlich auch ohne diese in Hubrichtung verlaufenden Gitterstäbe ausgeführt sein, und zwar im Rahmen einer vereinfachten Ausführung; eine größere Stabilität ergibt allerdings der stationäre Gitterrost mit einander kreuzenden Gitterstäben, so wie es in Fig. 14 schematisch dargestellt ist.

Die anhand von Fig. 1 erläuterte Wirkungsweise wird bei Betrachtung von Fig. 2 und 3 besonders deutlich. Dargestellt ist in Fig. 2 beispielsweise die eine Endposition A der beiden Steuerroste 9, 10. Dabei können die Gitterkammern 80 der ersten Gruppe 8a über ihre Durchlaßöffnungen 9a im oberen Steuerrost 9 mit der Schlitz- bzw. Lochweite 9.0 berieselt werden, so daß sich in ihnen die Schüttgut-Depots 11 ausbilden. Nach unten sind diese Gitterkammern der ersten Gruppe 8a durch die Absperrfelder 10b des zweiten Steuerrostes 10 abgesperrt. Die benachbarten Gitterkammern der zweiten Gruppe 8b sind dagegen durch die Durchlaßöffnungen 10a im zweiten Steuerrost 10 zum Abrieseln ihrer Schüttgut-Depots freigegeben bzw. geöffnet und an ihrer Oberseite durch die Absperrfelder 9b des ersten Steuerrostes 9 gegen Zuströmen von Schüttgut abgesperrt. Führen nun beide Steuerroste 9, 10 den Hub $x_{A, B}$ von Position A nach Fig. 2 in Position B nach Fig. 3 aus, so ergeben sich vertauschte Verhältnisse: Man erkennt, daß die Steuerroste 9, 10 nun so im Bezug auf die Gitterkammern 80 positioniert sind, daß die Gitterkammern der er-sten Gruppe 8a aus Fig. 3 die Funktion der Gitterkammern der zweiten Gruppe 8b aus Fig. 2 übernommen haben, d.h. es sind Abrieselkammern, und die Gitterkammern der zweiten Gruppe 8b in der Position nach Fig. 3 haben die Funktion der Gitterkammern der ersten Gruppe 8a in der Position nach Fig. 2 übernommen.

Generell läßt sich zum zweiten Ausführungsbeispiel nach Fig. 2 bis 4 sagen, daß auf je zwei quer zur Hubrichtung x verlaufenden Reihen von Gitterkammern 80 einer ersten Gruppe 8a, welche in der einen Endposition A des oberen und unteren Steuerrostes 9, 10 gefüllt sind oder werden, je zwei quer zur Hubrichtung verlaufende Reihen von Gitterkammern 80 einer zweiten Gruppe 8b in Hubrichtung x gesehen benachbart sind, welch letztere in der Endposition A des oberen und unteren Steuerrostes 9, 10 entleert sind oder werden. Dabei ist der Hinterkanten-Abstand $x_1$ der Durchlaßöffnungen 9a des ersten bzw. oberen Steuerrostes 9, welcher definiert ist durch den Teilhub der Durchlaßöffnungs-Hinterkante 14 von Position A (Fig. 2) bis zur Abdeckung der betreffenden Durchlaßöffnung 9a, höchstens gleich, vorzugsweise jedoch kleiner als der Vorderkanten-Abstand $x_2$ der Durchlaßöffnungen 10a des zweiten bzw. unteren Steuerrostes 10, wobei dieser Vorderkanten-Abstand $x_2$ definiert ist durch den Teilhub $x_2$ seiner jeweiligen Durchlaßöffnung 10a von der Position A bis hin zu einer Stellung, in der die betreffende Durchlaßöffnung 10a gerade noch nicht in den Bereich der nächstfolgenden Gitterkammer 80 gelangt. Die erwähnten Größen $x_1$ und $x_2$ gelten bei Bewegung in Hubrichtung $x_B$, d.h. bei Bewegung von Position A in B. Würde ein gegenläufiger Hub durchgeführt, so würden bezüglich der Hinterkanten- und Vorderkanten-Abstände die Größen $x_1'$ und $x_2'$ gelten. Die für die Größe $x_2$ maßgebliche Vorderkante ist mit 15 in Fig. 2 bezeichnet. Die geschilderten Abstandsverhältnisse haben dafür Bedeutung, daß immer eine definierte Überdeckung beim Steuervorgang gegeben ist, d.h. ein freies Abrieseln von der Schüttgutsäulenunterseite durch die Gitterkammern 80 nach unten nicht möglich ist; vielmehr können immer nur definierte Schüttgut-Depots in die Gitterkammer-Volumina einströmen. Man kann bei der Ausführung nach Fig. 2 bis 4 die Stäbe 12.1 des Traggitters 12, welche ein T-Profil haben, an ihren Köpfen mit Verbreiterungen 12.2 versehen, so daß auch unter Berücksichtigung der größten Toleranzen von Gitterrost 8 und den Steuerrosten 9, 10 niemals ein "Kurzschluß" durch die Gitterkammern 80 nach unten hindurch für das Schüttgut 1 erfolgen kann.

Fig. 4 zeigt eine günstige Ausführung für die Durchlaßöffnungen und Absperrfelder der Steuerroste 9, 10, wobei die Durchlaßöffnungen 9a, 10a im ersten und im zweiten Steuerrost quer zur Hubrichtung sich erstreckende Reihen von zueinander fluchtenden, gleichmäßig beabstandeten kreisförmige Öffnungen sind, welche gemäß einer Abwandlung auch als Rechteck-Öffnungen 9a1, 10a1 ausgeführt sein können. Zwischen den Reihen befinden sich jeweils die Absperrfelder 9b, 10b und die Luft-Durchlaßöffnungen 16 (gepunktet).

In den Figuren 2 und 3 bedeuten die schwarz ausgezogenen Hub-Pfeile $X_{A, B}$ und $X'_{A, B}$ den vom ersten bzw. zweiten Steuerrost 9 bzw. 10 auszuführenden Hub, um von Position A (Fig. 2) in Position B (Fig. 3) zu gelangen. Der Hubpfeil $X_{B, A}$ in Fig. 3 bedeutet demgemäß den Hub in Richtung $x_A$, damit die Steuerroste 9, 10 von Position B in Position A gelangen. Die ausgezogenen Pfeile bedeuten also durchzuführende Hübe, wogegen der umrandete Pfeil $X_{A, B}$ und $X'_{A, B}$ in Fig. 3 bedeuten, daß diese Hübe ausgeführt wurden bzw. in der Vergangenheit liegen.

Die Modifikation (drittes Ausführungsbeispiel) nach Fig. 5 zeigt ein Leitgitter 17 mit einzelnen Gitterleisten 17.1 am Grunde der Schüttgutsäule an Stelle des Leitrostes 7 nach den Figuren 1 bis 4. Der gezeigten Ausbildung und Anordnung des Leitrostes 17 liegt die Überlegung zugrunde, daß ja die Schüttgutsäule 100 an ihrer Unterseite durch die festen Elemente des Tragrostes 12 und des stationären Gitterrostes 8 in Verbindung mit den daran geführten Steuerrosten 9, 10 ausreichend abgestützt werden kann, wenn diese Elemente 8, 12, 9, 10 stabil genug ausgeführt werden. Die Leitgitterleisten 17.1 haben dann nicht mehr die Aufgabe, das Gewicht der Schüttgutsäule abzutragen, sondern lediglich, eine Querbewegung des Schüttgutes zu verhindern, wenn der obere Steuerrost 9 hin- und herbewegt wird, mit anderen Worten: die erwünschte planparallele Kolbenströmung zu gewährleisten, obgleich sich durch Reibschluß eine Kopplung zwischen dem oberen Steuerrost 9 und den darauf liegenden Schüttgutteilchen ergibt. Das Leitgitter 17 ist mit seinen Gitterleisten 17.1 stationär an den Behälterwandungen befestigt bzw. mit den übrigen stationären Teilen 8 und 12 zu einer Baueinheit vereinigt, die mit dem Behälter fest verbunden werden kann.

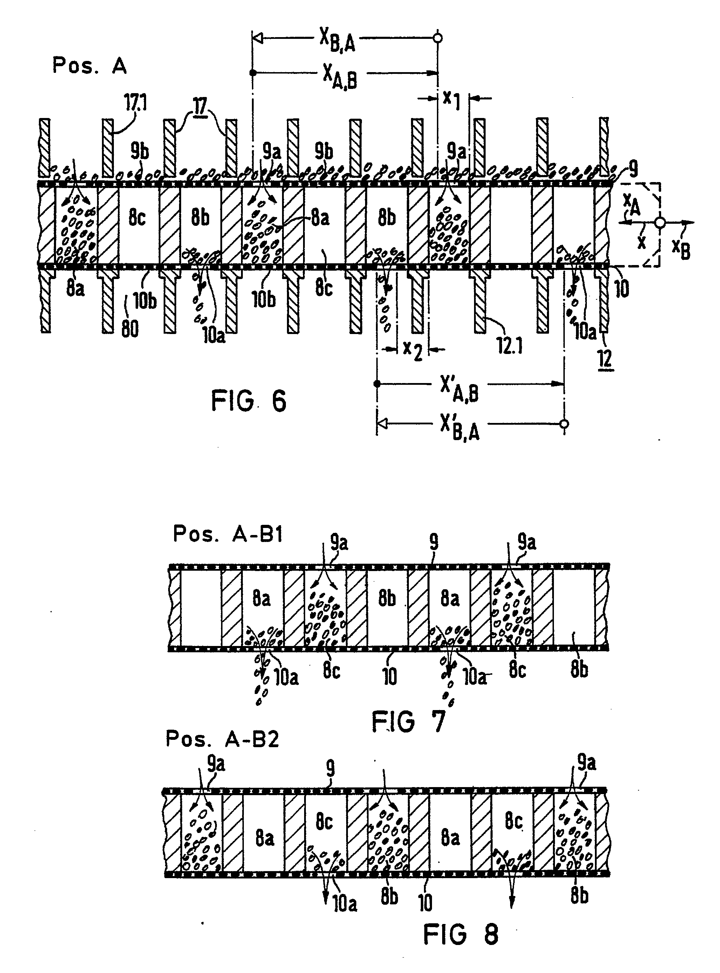

Die Leitgitterkonstruktion 17 nach Fig. 5 ist auch beim vierten Ausführungsbeispiel nach Fig. 6 bis 8 verwendet. Dieses Ausführungsbeispiel unterscheidet sich prinzipiell vom dritten Ausführungsbeispiel nach Fig. 5 lediglich darin, daß zwischen den Gitterkammern 8a der ersten Art bzw. ersten Gruppe und den Gitterkammern 8b der zweiten Art bzw. zweiten Gruppe eine dritte Gruppe 8c von Zwischen-Gitterkammern vorgesehen ist, was man durch die Anordnung und gegenseitige Zuordnung der Durchlaßöffnungen 9a, 10a und der Abdeckfelder 9b, 10b der beiden Steuerroste 9, 10 erreicht. Die Durchlaßöffnungen 9a sind im ersten Steuerrost 9 um drei Gitterkammerbreiten gegeneinander versetzt bzw. beabstandet angeordnet, und das Gleiche trifft für die Durchlaßöffnungen 10a des zweiten Steuerrostes 10 relativ zueinander zu. Dabei ist jedoch die Versetzung der Steueröffnungen 9a des oberen Steuerrostes 9 zu den Durchlaßöffnungen 10a des zweiten Steuerrostes 10 lediglich eine Gitterkammerbreite. Man erkennt aus Fig. 6 bis 8, daß in der Steuerrost-Endposition A – in Hubrichtung x gesehen – auf je eine quer zur Hubrichtung verlaufende erste Reihe von Gitterkammern 8a einer ersten Gruppe, welche befüllt sind oder werden, eine zweite Reihe von Zwischen-Gitterkammern 8c folgt, welche in der Endposition A nach oben und nach unten durch die Absperrfelder 9b, 10b abgedeckt sind. Erst auf diese zweite Reihe der Zwischen-Gitterkammern 8c folgt dann die weitere Reihe der Gitterkammern 8b der zweiten Gruppe, welche in Position A entleert sind oder gerade entleert werden. Hierauf folgt dann wieder mit gleichförmiger Periodizität eine Reihe von Gitterkammern 8a der ersten Gruppe usw. Bei der Darstellung nach Fig. 6 bis 8 sind dieselben Kammern 8a bis 8c von oben nach unten gesehen in Flucht zueinander gezeichnet. Man erkennt, daß beim Verschieben der Steuerroste 9, 10 in Richtung $X_{A, B}$ zwei Zwischenpositionen nämlich A–B1 und A–B2 durchlaufen werden, bevor die Position B erreicht wird, welche nicht dargestellt ist, jedoch prinzipiell so aussieht wie in Fig. 6 gezeigt. Die Zwischen-Gitterkammern 8c haben den Vorteil, daß bei den Gitterkammern 8a, 8b, zwischen denen sie eingefügt sind, auf den Hinterkanten-Abstand $x_1$ und auf den Vorderkanten-Abstand $x_2$ nicht besonders geachtet zu werden braucht, weil dabei $x_1 < x_2$ sowieso gewährleistet ist. Aus diesem Grunde kann es zweckmäßig sein, weitere Zwischen-Gitterkammern 8c zwischen den in den Figuren 6 bis 8 unmittelbar zueinander benachbarten Gitterkammern 8a und 8b einzufügen (nicht dargestellt).

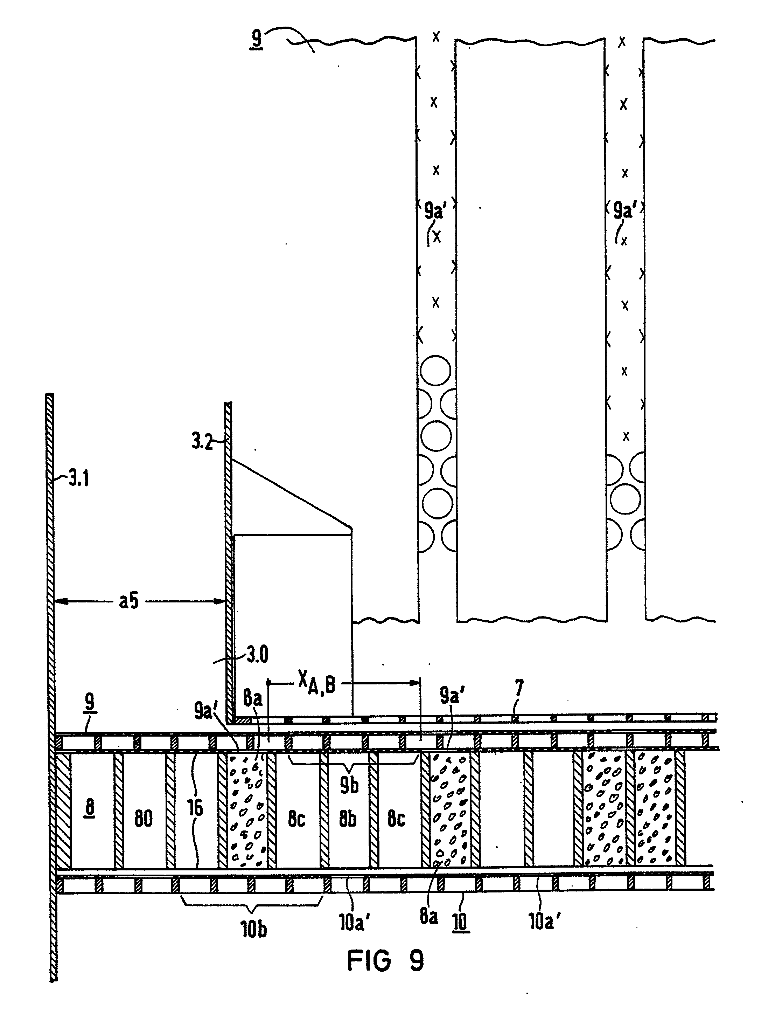

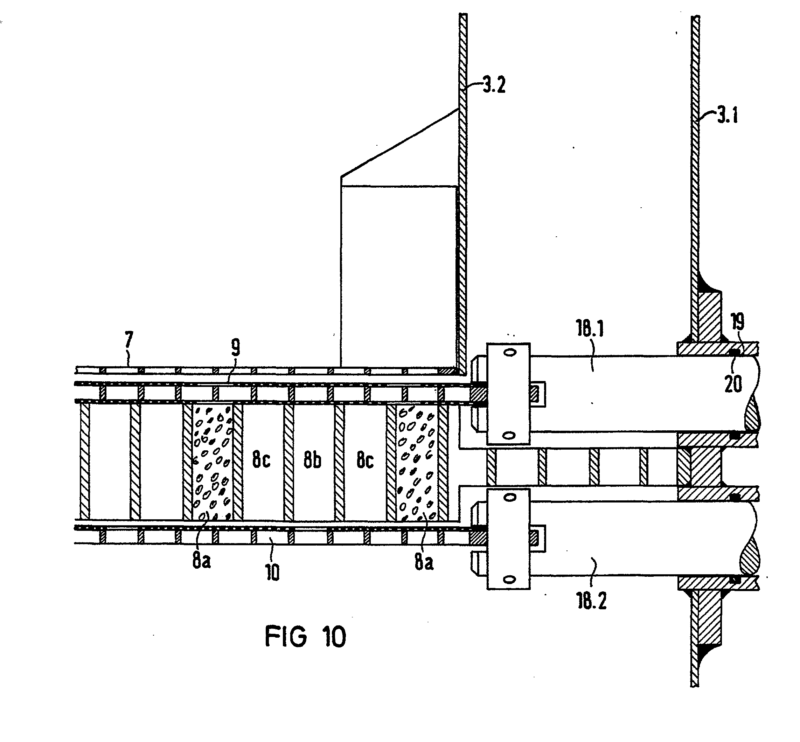

Dies ist praktisch beim fünften Ausführungsbeispiel nach Fig. 9 und 10 der Fall, vergleiche die dort eingetragenen Gitterkammer-Bezugszeichen 8a bis 8c. Der Abstand von einer Durchlaßöffnung 9a' bis zur nächsten beträgt ca. vier Gitterteilungen des Gitterrostes 8, die obere Reihe der Durchlaßöffnungen 9a' ist zur Reihe der unteren Durchlaßöffnungen 10a' um 2 Gitterteilungen versetzt, und der Hub $X_{A, B}$ beträgt drei Gitterteilungen bzw. vier Lochteilungen (Teilung für die Durchlaßöffnungen 9a' bzw. 10a'). Die Durchlaßöffnungen des ersten und zweiten Steuerrostes 9, 10 sind hier mit 9a' bzw. 10a' bezeichnet, weil sie, wie dargestellt, schlitzförmig sind. Der obere Steuerrost 9 ist hier in Sandwich-Bauweise ausgeführt und deshalb auch als besonders biegesteifes Tragelement geeignet, dies trifft auch für den zweiten Steuerrost 10 zu, welcher aus U-förmigen Gitterprofilen zusammengesetzt ist, vergleiche auch Fig. 11. Mit 3.2 ist noch eine innere Behälterwand bezeichnet, an welcher der Leitrost 7 befestigt ist. Zwischen dieser inneren Behälterwand 3.2 und der äußeren Behälterwand 3.1 befindet sich ein Freiraum 3.0 der Weite a5, welcher es gestattet, daß die Steuerroste 9, 10 ihren Hub $X_{A, B}$ bzw. entgegengesetzt $X_{B, A}$ ausführen können. Erkennbar ist aus Fig. 9 und 10 besonders gut die Perforation 16 zwecks Erzielung der Gasdurchlässigkeit der Steuerroste 9, 10.

Fig. 10 zeigt das rechte Ende der Einrichtung mit sinngemäßer Anordnung und Zuordnung der Steuerroste, des stationären Gitterrostes und des Leitrostes, wobei die beiden Steuerroste 9, 10 an je einen Schubbolzen 18.1 bzw. 18.2 angeschlossen sind, welche durch gasdichte Gehäusedurchführungen 19 mit entsprechenden O-Ringen 20 nach außen durch die Wand 3.1 hindurchgeführt sind. Diese Antriebsverbindung ermöglicht eine Steuerung des ersten und zweiten Steuerrostes 9, 10 unabhängig voneinander, wenn auch – wie bereits erwähnt – die bevorzugte, weil einfachere Ausführungsform, diejenige ist, bei der die beiden Steuerroste 9, 10 starr miteinander gekuppelt sind.

Fig. 11 zeigt in schematischer Gesamtansicht und Fig. 12 bis 14 im Detail die Gitter- und Steuerrostkonstruktion nach Fig. 9 und 10, wobei jedoch der Steuerrost-Antrieb etwas modifiziert ist. Fig. 11 zeigt eine Antriebskurbel 21 unterhalb des unteren Steuerrostes 10, welcher mit einer quer zur Hubrichtung verlaufenden Querstange 22 in eine langlochartige Ausnehmung am Kurbelende eingreift. Der untere bzw. zweite Steuerrost 10 ist außerdem in Hubrichtung x an der in Hubrichtung fluchtenden Reihe der Lagerrollenkörper 23, rollend gelagert. Im übrigen sind die gleichen Bezugszeichen wie in Fig. 1 auch für die gleichen Teile vorgesehen. Die Schichthöhe H ist, wie schon aus Fig. 1 erkennbar, überall gleichmäßig. Zusätzlich zu Fig. 1 ist noch ein Handloch 24 dargestellt, welches bei geöffnetem Flanschdeckel einen Zugang zum Raum 25 oberhalb der Schüttgutsäule 100 gestattet. Zum gleichmäßigen Befüllen des Schüttgutes über die gesamte Grundfläche dient die Befülleinrichtung 26, welche eine vom Luftstrom in Umdrehung versetzte Verteilungsschaufel 27 aufweist, die an einem strömungsgünstig geformten Sternkörper 28 drehbar gelagert ist und das ankommende Schüttgut gemäß Pfeil 29 gleichmäßig auf die Schichtoberseite 1.40 verteilt.

Fig. 12 zeigt perspektivisch-schematisch den ersten und zweiten Steuerrost 9, 10 in der Ausführung mit schlitzförmigen Durchlaßöffnungen 9a' und 10a' (vergleiche Fig. 9 und Fig. 10), wobei der zweite Steuerrost 10 aus zueinander beabstandeten U-Profil-Trägern (vergleiche Fig. 11) aufgebaut ist, zwischen denen sich die Durchlaßschlitze 10a' ergeben. In der Mitte zwischen den beiden Seitenwänden dieser als Ganzes mit 30 bezeichneten Steuerrost-Konstruktion befindet sich eine Verstärkungsrippe 31, so daß das Gewicht der Schüttgut-Depots bzw. der gesamten Säule auf diese Konstruktion 30 und den in Fig. 14 perspektivisch dargestellten Gitterrost übertragen wird. Letzterer ist aus einander kreuzenden Gitterleisten 8.1, 8.2 nach Art eines Lichtgitterrostes aufgebaut, wobei er jedoch in der Mitte einen in Hubrichtung x, d.h. planparallel zu den Längsgitterleisten 8.2, orientierten Längsschlitz 32 aufweist. In diesen faßt die Verstärkungsrippe 31, d.h., die Konstruktion 30 ist in Hubrichtug x hin- und herbewegbar und umfaßt dabei den stationären Gitterrost 8. Die Relation des Gitterrostes 8 und der Steuerrost-Konstruktion 30 ist aus der Seitenansicht nach Fig. 13 noch einmal erkennbar. Mit 320 sind Gehäuseflanschverbindungen des Behälters 3 bezeichnet. Der stationäre Gitterrost 8 ist an den Behälter-Schmalseiten mit der Wand des Behälters 3 fest verbunden (nicht dargestellt).

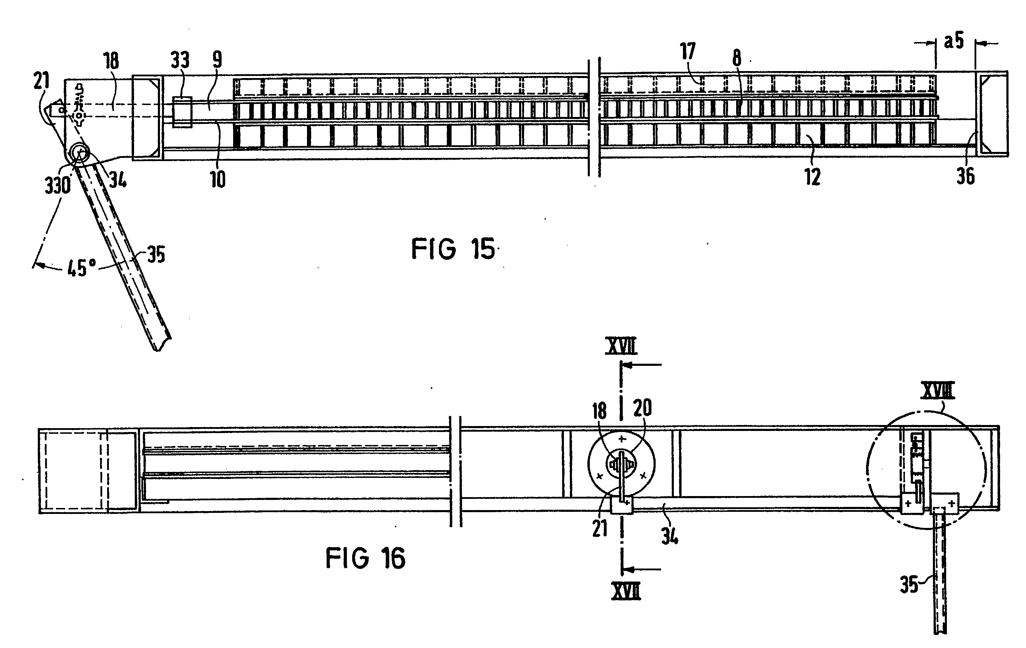

Fig. 15 zeigt eine Ausführung der Einrichtung nach den Figuren 6 bis 8, wie sie für die Praxis geeignet ist. Man erkennt das obere Leitgitter 17, das untere Traggitter 12 und dazwischen den stationären Gitterrost 8 mit dem ersten (oberen) und dem zweiten (unteren) Steuerrost 9 bzw. 10. Beide Steuerroste sind über ein Ankerstück 33 mit einem Schubbolzen 18 verbunden, letzterer ist dichtend durch die Wand dieser dargestellten Baueinheit hindurchgeführt und über die Schubkurbel 21, die an einer bei 330 gelagerten Welle 34 sitzt, mit einer Betätigungsstange 35 verbunden. Wird die Betätigungsstange 35 im Uhrzeigersinn um ca. 45°, wie dargestellt verschwenkt, so führen die beiden Steuerroste 9, 10 einen Hub bis zum Gehäuseanschlag 36 aus. Sie durchfahren dabei den Freiraum a5. Bei Bewegung der Betätigungsstange im Gegenzeigersinn zurück zur dargestellten Position ist dann ein vollständiger hin- und hergehender Hub und damit ein gleichmäßiger Abrieselvorgang für eine definierte Schüttgut-Teilmenge durchgeführt.

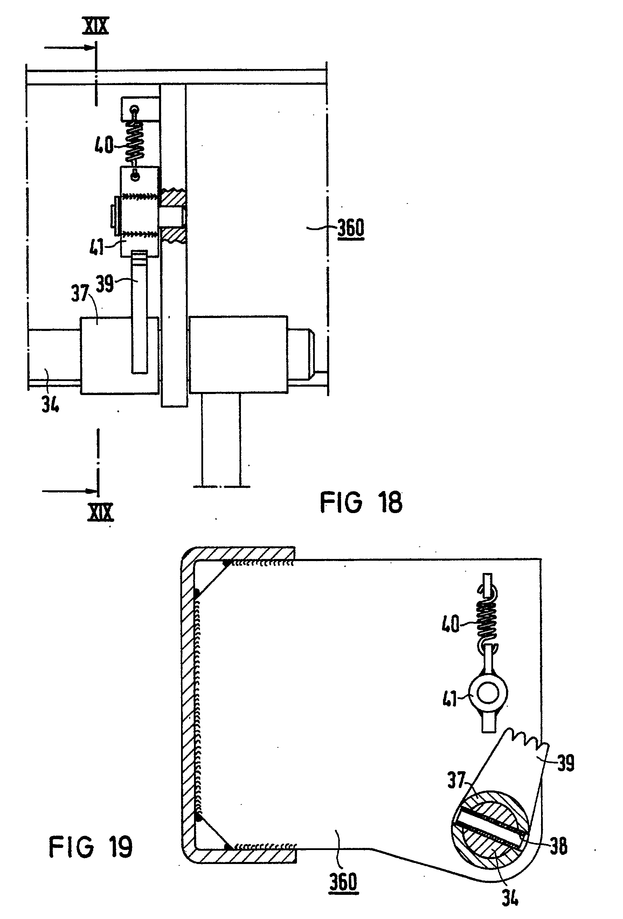

Fig. 16 zeigt die Ansicht auf das linke Ende der Einrichtung nach Fig. 15 mit der Welle 34 und der Schubkurbel 21. Die Einzelheit XVIII betrifft ein Richtgesperre 36, das anhand von Fig. 18 und 19 weiter unten noch erläutert wird.

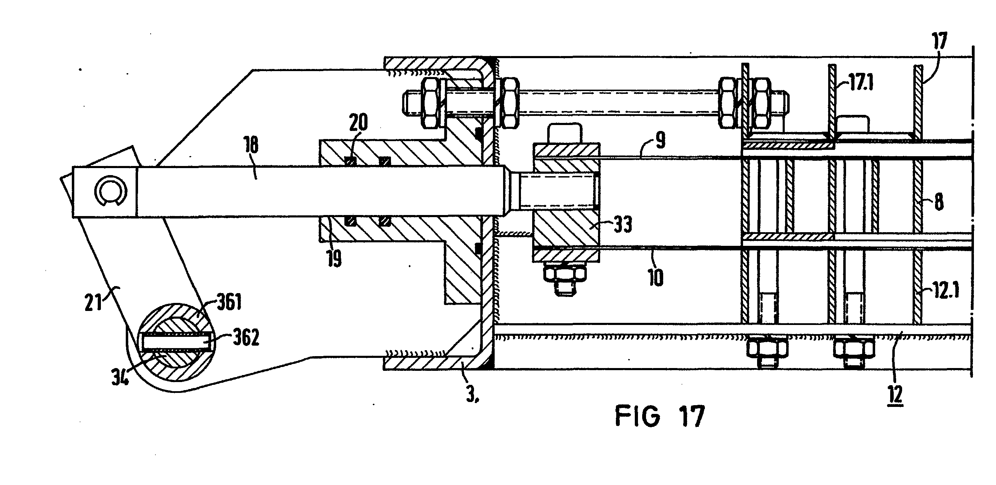

Zunächst zu Fig. 17. Man erkennt, daß die Schubkurbel 21 mit der Welle 34 über eine Büchse 361 drehmomentfest (Splint 37) verbunden ist. Erkennbar ist weiterhin die starre Verbindung des Leitgitters 17 und des Traggitters 12 mit der Gehäusewand 3.1.

Der Schubbolzen 18, der eigentlich als Zug-Schub-Bolzen bezeichnet werden müßte, da er beim Schieben der Steuerroste auf Druck und beim Ziehen der Steuerroste auf Zug beansprucht wird, ist in Fig. 16 nur einmal gezeichnet, jedoch geht die Welle 34 zur anderen Hälfte der Gitterkonstruktion 30 durch, wo spiegelsymmetrisch eine weitere Schubbolzen-Durchführung an die Welle 34 angeschlossen ist. Diese Konstruktion empfiehlt sich bei Behältergrundflächen mit größeren Längenabmessungen quer zur Hubrichtung, wobei also der Gitterrost und dementsprechend die Steuerroste quer zur Hubrichtung x in mindestens zwei Teilgitterroste bzw. Teilsteuerroste unterteilt sind. Die Betätigung der beiden Doppelsteuerrost-Hälften erfolgt dann über je einen Schubbolzen 18 und die gemeinsame Welle 34 mittels der Betätigungsstange 35.

Fig. 18 und Fig. 19 zeigen noch, daß zur Gewährleistung eines vollständigen, einmal hin- und hergehenden Hubes des Doppelsteuerrostes 9, 10 mit der Welle 34 der Schubkurbel 21 über eine Büchse 37 mit Splint 38 ein Zahnsegment 39 drehmomentfest verbunden ist, welches bei Betätigung der Stange 35 mit einer mittels der Zugfeder 40 belasteten Sperrklinke 41 kämmt. Dieses Richtgesperre 39, 41 läßt nur eine vollständige Pendelbewegung der Betätigungsstange 35 zu, damit auf diese Weise immer gleichförmige Mengen an Schüttgut abgerieselt werden.

Kommt nämlich das Zahnsegment 39 bei Bewegung in Gegenzeigerrichtung mit der Sperrklinke 41 in Eingriff, so verschwenkt es diese in Uhrzeigerrichtung, und die Sperrklinke 41 ratscht bei Weiterdrehung der Welle 34 nacheinander über die Zähne und Zahnzwischenräume des Zahnsegmentes 39 bis zu dessen einer Endposition, blockiert hingegen in der anderen Drehrichtung. Wenn man dann mittels der Betätigungsstange 35 (Fig. 15) und über die Welle 34 das Zahnsegment 39 in Uhrzeigerrichtung verdreht (Rückstellrichtung), dann verstellt es bei seinem Angriff an der Sperrklinke 41 diese aus deren gezeigter Mittelposition in Gegenzeigerrichtung, wodurch ein Weiterdrehen des Zahnsegmentes 39 in Uhrzeigerrichtung während und bis zum Ende des Hubes möglich ist, aber nicht eine Richtungsumkehr. Letztere wird während beider Teilhübe, solange das Richtgesperre 39, 41 in Eingriff ist, verhindert. – Anstelle der oder zusätzlich zu der Betätigungsstange 35 könnte auch ein motorischer Antrieb Verwendung finden (nicht dargestellt).

## Patentansprüche

1. Einrichtung zum gesteuerten, möglichst planparallelen Abzug von fließfähigem Schüttgut (1) an der Unterseite einer in einem Behälter (3) enthaltenen Schüttgutsäule (100), insbesondere bei einem Wanderbettfilter zum Ablassen verbrauchter Filtermasse im Zuge der Reinigung von gas- oder dampfförmigen Medien, von welchen die Filtermasse bzw. Schüttgutsäule (100) von unten nach oben entgegengesetzt zu der Schüttgutfließrichtung (z) durchströmbar ist, dadurch gekennzeichnet,
– daß mit Abstandszwischenraum zur Unterseite der Schüttgutsäule (100) unterhalb derselben und mit etwa gleicher Grundfläche ein stationärer Gitterrost (8) mit in Horizontalrichtung aufeinander folgenden Gitterkammern (80) angeordnet ist,
– daß an der Oberseite des Gitterrostes (8) in einem Abstandszwischenraum (a1) zwischen diesem und der Unterseite der Schüttgutsäule (100) ein die Grundfläche des Gitterrostes (8) überdeckender, in einer ersten horizontalen Hubrichtung (x) verschiebbar gelagerter erster Steuerrost (9) angeordnet ist, welcher mit der Gitterrostteilung entsprechenden, einander abwechselnden Durchlaßöffnungen (9a) und Absperrfeldern (9b) versehen ist,
– und daß an der Unterseite des Gitterrostes (8) ein zweiter, achsparallel zur ersten horizontalen Hubrichtung (x) verschiebbar gelagerter Steuerrost (10) angeordnet ist, dessen Durchlaßöffnungen (10a) und Absperrfelder (10b) in bezug auf diejenigen des ersten Steuerrostes (9) so angeordnet und horizontal steuerbar sind, daß eine erste Gruppe (8a) von Gitterkammern (80) des Gitterrostes (8) über die Durchlaßöffnungen (9a) des ersten Steuerrostes (9) mit Schüttgut (1) gefült und an ihrer Unterseite von den Absperrfeldern (10b) des zweiten Steuerrostes (10) gegen Abrieseln ihres Schütt-Depots (11) abgesperrt sind, dagegen eine mit ihren Gitterkammern auf diejenigen der ersten Gruppe (8a) von Gitterkammern (80) folgende zweite Gruppe (8b) von Gitterkammern (80) mittels der Absperrfelder (9b) des ersten Steuerrostes (9) gegen Aufnahme von Schüttgut (1) abgedeckt und von den Durchlaßöffnungen (10a) des zweiten Steuerrostes (10) zum Entleeren ihres Schüttgut-Depots (11) freigegeben sind, und umgekehrt.

2. Einrichtung nach Anspruch 1, dadurch gekennzeichnet, daß der zweite Steuerrost (10) mit den auf ihm befindlichen Schüttgut-Depots (11) auf einem Traggitter (12) abgestützt und an diesem in Hubrichtung (x) geführt ist.

3. Einrichtung nach Anspruch 1 oder 2, dadurch gekennzeichnet, daß der erste Steuerrost (9) mit dem auf ihm befindlichen Schüttgut (1) auf dem stationären Gitterrost (8) abgestützt und an diesem in Hubrichtung (x) geführt ist.

4. Einrichtung nach einem der Ansprüche 1 bis 3, dadurch gekennzeichnet, daß zur mindestens teilweisen Abstützung der Schüttgutsäule (100) und zur Verminderung der Reibungskräfte zwischen dem ersten Steuerrost (9), der Schüttgutsäulen-Unterseite und dem Gitterrost (8) bei Bewegung des ersteren an der Unterseite der Schüttgutsäule (100) ein Leitrost (7) angeordnet ist, der mit über die Grundfläche der Schüttgutsäule (100) verteilten ersten und zweiten Öffnungen (7.1, 7.0) zum Abrieseln des Schüttgutes und zum Einlassen der von unten zuströmenden gas- oder dampfförmigen Medien (g1) versehen ist.

5. Einrichtung nach einem der Ansprüche 1 bis 3, dadurch gekennzeichnet, daß am Grunde der Schüttgutsäule ein horizontales Leitgitter (17) mit einzelnen hochkant in die Schüttgutsäule (100) ragenden Gitterleisten (17.1) zur Verhinderung einer Querbewegung der mit dem oberen Steuerrost (9) reibschlüssig gekoppelten Schüttgut-Teilchen (1) bei Bewegung des Steuerrostes (9) angeordnet ist.

6. Einrichtung nach einem der Ansprüche 1 bis 5, dadurch gekennzeichnet, daß die Durchlaßöffnungen (9a, 10a) im ersten und/oder im zweiten Steuerrost (9, 10) sich quer zur Hubrichtung (x) erstreckende Schlitze (9a', 10a') sind.

7. Einrichtung nach einem der Ansprüche 1 bis 5, dadurch gekennzeichnet, daß die Durchlaßöffnungen im ersten und/oder im zweiten Steuerrost (9, 10) quer zur Hubrichtung sich erstreckende Reihen von zueinander fluchtenden, gleichmäßig beabstandeten Öffnungen (9a, 10a; 9a1, 10a1) sind.

8. Einrichtung nach Anspruch 7, dadurch gekennzeichnet, daß die Durchlaß-Öffnungen Rundöffnungen (9a1, 10a1) sind.

9. Einrichtung nach Anspruch 7, dadurch gekennzeichnet, daß die Durchlaß-Öffnungen Rechteck-Öffnungen (9a, 10a) sind.

10. Einrichtung nach einem der Ansprüche 1 bis 9, dadurch gekennzeichnet, daß der erste und der zweite Steuerrost (9, 10) starr miteinander gekoppelt und als Doppel-Steuerrost gemeinsam in der horizontalen Hubrichtung (x) hin- und herbewegbar gelagert sind, so daß in Hubrichtung aufeinander folgende Gitterkammern (80) der ersten (8a) und zweiten Gruppe (8b) bei Horizontalbewegung des Doppel-Steuerrostes abwechselnd entweder mit Schüttgut (1) von oben gefüllt oder von Schüttgut nach unten entleert werden.

11. Einrichtung nach einem der Ansprüche 1 bis 10, dadurch gekennzeichnet, daß in der durch die Fließrichtung (z) gegebenen Projektionsrichtung gesehen und in den beiden Steuerrost-Endpositionen A bzw. B die Absperrfelder (9b) des ersten Steuerrostes (9) im Flächenbereich der Durchlaßöffnungen (10a) des zweiten Steuerrostes (10) liegen und die Durchlaßöffnungen (9a) des ersten Steuerrostes (9) im Flächenbereich der Absperrfelder (10b) des zweiten Steuerrostes (10).

12. Einrichtung nach einem der Ansprüche 1 bis 8, dadurch gekennzeichnet, daß auf je zwei quer zur Hubrichtung (x) verlaufende Reihen von Gitterkammern (80) einer ersten Gruppe (8a), welche in der einen Endposition A des oberen und unteren Steuerrostes (9, 10) befüllt sind oder werden, je zwei quer zur Hubrichtung verlaufende Reihen von Gitterkammern (80) einer zweiten Gruppe (8b) in Hubrichtung (x) gesehen benachbart sind, welche in der Endposition A des oberen und unteren Steuerrostes (9, 10) entleert sind oder werden, wobei der Hinterkanten-Abstand $(x_1)$ der Durchlaßöffnungen (9a) des ersten bzw. oberen Steuerrostes (9), d.h., der Teilhub der Durchlaßöffnungs-Hinterkante (14) von Position A bis zur Abdeckung der Durchlaßöffnung, höchstens gleich, vorzugsweise jedoch kleiner ist als der Vorderkanten-Abstand $(x_2)$ der Durchlaßöffnungen (10a) des zweiten bzw. unteren Steuerrostes (10), d. h. der Teilhub seiner jeweiligen Durchlaßöffnungs-Vorderkante (15) von Position A bis zu einer Stellung, in der die betreffende Durchlaßöffnung gerade noch nicht öffnet.

13. Einrichtung nach einem der Ansprüche 1 bis 12, dadurch gekennzeichnet, daß in der Steuerrost-Endposition A – in Hubrichtung (x) gesehen – auf je eine quer zur Hubrichtung verlaufende erste Reihe von Gitterkammern (80) einer ersten Gruppe (8a), welche befüllt sind oder werden, wenigstens je eine zweite Reihe von Zwischen-Gitterkammern (8c) folgt, welche in Endposition A nach oben und unten durch Absperrfelder (9b, 10b) abgedeckt ist,
daß auf diese zweite Reihe der Zwischen-Gitterkammern (8c) eine weitere Reihe der Gitterkammern (80) der zweiten Gruppe (8b) folgt, welche in der erwähnten Steuerrost-Endposition A entleert sind oder werden,
und daß hierauf wieder eine Reihe von Gitterkammern (80) der ersten Gruppe (8a) folgt, und so fort.

14. Einrichtung nach Anspruch 10, dadurch gekennzeichnet, daß die beiden Steuerroste über ein Ankerstück mit Schubbolzen (18; 18.1, 18.2) verbunden sind, welche durch die anliegende Seitenwand des Behälters (3) dichtend hindurchgeführt sind, und daß mit den Schubbolzen (18; 18.1, 18.2) eine Schubkurbel (21) kraftschlüssig gekuppelt ist.

15. Einrichtung nach Anspruch 14, dadurch gekennzeichnet, daß mit der Welle (34) der Schubkurbel (21) eine Betätigungsstange (35) drehmomentfest verbunden ist.

16. Einrichtung nach Anspruch 14 oder 15, dadurch gekennzeichnet, daß zur Gewährleistung eines vollständigen, einmal hin- und hergehenden Hubes des aus den beiden Steuerrosten (9, 10) bestehenden Doppelsteuerrostes (9, 10) mit der Welle (34) der Schubkurbel (21) ein Richtgesperre (39, 41) in Eingriff steht, welches jeweils nur eine vollständige Pendelbewegung der Betätigungsstange zuläßt.

17. Einrichtung nach einem der Ansprüche 1 bis 16, dadurch gekennzeichnet, daß bei Behältergrundflächen mit größeren Längenabmessungen quer zur Hubrichtung (x) der Gitterrost (8) und dementsprechend die Steuerroste (9, 10) quer zur Hubrichtung in mindestens zwei Teilgitterroste bzw. Teilsteuerroste unterteilt sind und daß die Teilsteuerroste jeweils mit Schubbolzen und mit Schubkurbeln versehen und die Schubkurbeln durch eine gemeinsame Betätigungswelle (34) gekoppelt sind, an welch letzterer die Betätigungsstange (35) angreift.

## Claims

1. A device for the controlled, as plane parallel as possible, discharge of free-flowing bulk material (1) from the underside of a column (100) of bulk material contained in a container (3), in particular in a moving bed filter for discharging a used filter mass during the cleaning of gaseous or vaporous media which can pass through the filter mass or bulk material column (100) from the bottom to the top inverse to the direction of flow (z) of the bulk material, characterised in that
- arranged beneath and spaced from the underside of the bulk material column (100) and having approximately the same surface area is a stationary grate (8) with grid chambers arranged successively in a horizontal direction,
- arranged on the upper side of the grate (8) in an intermediate space (a1) between the grate and the underside of the bulk material column (100) is a first control grate (9) covering the surface area of the grate (8) mounted to be displaceable in a first horizontal direction of displacement (x), and which is provided with passage openings (9a) and sealing fields (9b) alternating with one another corresponding to the grate ruling, and
- arranged on the underside of the grate (8) is a second control grate (10) mounted to be displaceable axially parallel to the first horizontal direction of displacement (x), whose passage openings (10a) and sealing fields (10b) are so arranged relative to those of the first control grate (9) and horizontally controllable that a first group (8a) of grid chambers (80) of the grate (8) are filled by way of the passage openings (9a) of the first control grate (9) with bulk material (1) and are sealed on their underside by the sealing fields (10b) of the second control grate (10) so that none of their bulk material deposit (11) can trickle down, in contrast a second group (8b) of grid chambers (80) having their grid chambers following on from those of the first group (8a) of grid chambers (80) are covered so as not to receive bulk material (1) by the sealing fields (9b) of the first control grate (9) and are freed by the passage openings (10a) of the second control grate (10) for emptying of their bulk material deposit (11), and vice-versa.

2. A device according to claim 1, characterised in that the second control grate (10) with the bulk material deposit (11) located thereon is supported on a supporting grate (12) and is guided on this in the direction of displacement (x).

3. A device according to claim 1 or claim 2, characterised in that the first control grate (9) with the bulk material (1) located thereon is supported on the stationary grate (8) and is guided on this in the direction of displacement (x).

4. A device according to any one of claims 1 to 3, characterised in that in order to at least partly support the bulk material column (100) and to reduce the frictional forces between the first control grate (9), the underside of the bulk material column and the grate (8) when moving the former on the underside of the bulk material column (100), a guide grate (7) is provided having first and second openings (7.1, 7.0) distributed over the surface area of the bulk material column (100) to let the bulk material trickle through and to let in the gaseous or vaporous media (g1) flowing up from below.

5. A device according to any one of claims 1 to 3, characterised in that arranged at the base of the bulk material column there is a horizontal guide grate (17) having individual grate bars (17.1) projecting on edge into the bulk material column (100) to prevent a transverse movement of the bulk material particles (1) coupled frictionally to the upper control grate (9), when the control grate (9) moves.

6. A device according to any one of claims 1 to 5, characterised in that the passage openings (9a, 10a) in the first and/or in the second control grate (9, 10) are slits (9a', 10a') extending transverse to the direction of displacement (x).

7. A device according to any one of claims 1 to 5, characterised in that the passage openings in the first and/or in the second control grate are openings (9a, 10a; 9a1, 10a1) aligned with one another, spaced uniformly and extending in rows transverse to the direction of displacement.

8. A device according to claim 7, characterised in that the passage openings are circular openings (9a1, 10a1).

9. A device according to claim 7, characterised in that the passage openings are rectangular openings (9a, 10a).

10. A device according to any one of claims 1 to 9, characterised in that the first and the second control grates (9, 10) are coupled rigidly to one another and are mounted so that they can move back and forth together as a double control gate in the horizontal direction of displacement (x) so that in the direction of displacement successive grid chambers (80) of the first (8a) and second group (8b) are alternately either filled from above with bulk material (1) or emptied from below when the double control grate moves horizontally.

11. A device according to any one of claims 1 to 10, characterised in that viewed in the projection direction given by the direction of flow (z) and in the two grate end positions A and B the sealing fields (9b) of the first control grate (9) are in the surface area of the passage openings (10a) of the second control grate (10) and the passage openings (9a) of the first control grate (9) are in the surface area of the sealing fields (10b) of the second control grate (10).

12. A device according to any one of claims 1 to 8, characterised in that each two rows of grid chambers (80) of a first group (8a) running transverse to the direction of displacement (x), which in one end position A of the upper and lower control grate (9, 10) are full or are filled, are adjoined by two rows of grid chambers (80) of a second group (8b) running transverse to the direction of displacement viewed in the direction of displacement (x), which in the end position A of the upper and lower control grate (9, 10) are empty or are emptied, the rear edge distance ($x_1$) of the passage openings (9a) of the first or upper control grate (9), i.e. the partial displacement of the rear edge (14) of the passage opening from position A until covering the passage openings being, at the most, the same as, but preferably smaller than, the front edge distance ($x_2$) of the passage openings (10a) of the second or lower control grate (10), i.e. the partial displacement of the respective front edge (15) of the passage opening from position A up to a position in which the respective passage opening is just about to open.

13. A device according to any one of claims 1 to 12, characterised in that in the control grate end position A – viewed in the direction of displacement (x) – each first row of grid chambers (80) of a first group (8a) running transverse to the direction of displacement, which are full or are being filled, is followed by at least one respective second row of intermediate grid chambers (8c) which in the end position A is covered at the top and bottom by sealing fields (9b, 10b), in that this second row of intermediate grid chambers (8c) is followed by a further row of grid chambers (80) of the second group (8b) which in the said control grate end position A are empty or are being emptied, and in that after this another row of grid chambers (80) of the first group (8a) follows and so forth.

14. A device according to claim 10, characterised in that the two control grates are connected by an anchor with thrust bolts (18; 18.1, 18.2) which are passed through the adjoining side wall of the container (3) in a sealing manner and that a crank (21) is coupled to the thrust bolts (18; 18.1, 18.2) so as to transmit force.

15. A device according to claim 14, characterised in that an operating rod (35) is connected to the shaft (34) of the crank (21) so as to transmit torque.

16. A device according to claim 14 or claim 15, characterised in that in order to ensure a complete, one-time back and forth stroke of the double grate (9, 10), comprising the two control grates (9, 10), a directional lock (39, 41) engages with the shaft (34) of the crank (21) which only allows a complete pendulum movement of the operating rod each time.

17. A device according to any one of claims 1 to 16, characterised in that in the case of container surface areas having larger longitudinal dimensions transverse to the direction of displacement (x), the grate (8), and correspondingly the control grates (9, 10) transverse to the direction of displacement, are subdivided into at least two partial grates or partial control grates and that the partial control grates are each provided with thrust bolts and with cranks and the cranks are coupled by a common operating shaft (34) with which the operating rod (35) engages.

**Revendications**

1. Dispositif de soutirage contrôlé, autant que possible parallèlement à un plan, d'un produit en vrac (1) susceptible de s'écouler du bas d'une colonne de produit en vrac (100) contenue dans une cuve, notamment pour vider un filtre à lit mobile d'une masse filtrante usée au cours de l'épuration de milieux sous forme de gaz ou de vapeur, qui peuvent passer de bas en haut à travers la masse filtrante ou la colonne de produit en vrac (100) en sens inverse du sens d'écoulement du produit en vrac (z), caractérisé
– en ce qu'un caillebotis (8), fixe et ayant des chambres (80) se succédant dans la direction horizontale, est monté à distance du bas de la colonne de produit en vrac (100), sous celle-ci et en ayant à peu près la même surface de base,
– en ce que sur la face supérieure du caillebotis (8) est montée, dans un intervalle (a1) entre celui-ci et le bas de la colonne de produit en vrac (100), une première grille de commande (9), qui recouvre la surface de base du caillebotis (8), qui peut coulisser dans une première direction horizontale de course (x) et qui est munie d'orifices de passage (9a) et de parties pleines (9b) alternés en correspondance avec le pas du caillebotis,
– et en ce que sur la face inférieure du caillebotis (8) est montée une seconde grille de commande (10), qui peut coulisser parallèlement à l'axe dans la première direction horizontale de course (x) et dont les orifices de passage (10a) et les parties pleines (10b) sont disposés par rapport à ceux de la première grille de commande (9) et peuvent être commandés horizontalement de manière qu'un premier groupe (8a) de chambres (80) du caillebotis (8) au-dessus des orifices de passage (9a) de la première grille de commande (9) soient emplies de produit en vrac (1) et que leurs faces inférieures soient empêchées, par les parties pleines (10b) de la seconde grille de commande (10), d'un ruissellement de leur dépôt en vrac (11), alors qu'un second groupe (8b) de chambres (80) du caillebotis, dont les chambres font suite à celles du premier groupe (8a) de chambres (80) du caillebotis, sont empêchées, au moyen des parties pleines (9b) de la première grille de commande (9), de recevoir du produit en vrac (1) et sont dégagées par les orifices de passage (10) de la seconde grille de commande (10) en vue de se vider de leur dépôt de produit en vrac (11), et inversement.

2. Dispositif suivant la revendication 1, caractérisé en ce que la seconde grille mobile (10), y compris le dépôt de produit en vrac (11) qui s'y appuie sur un treillis support (12) et est guidée sur celui-ci, dans la direction de la course (x).

3. Dispositif suivant la revendication 1 ou 2, caractérisé en ce que la première grille mobile (9) y compris le produit en vrac (1) qui s'y trouve, s'appuie sur le caillebotis (8) fixe et est guidée sur celui-ci, dans la direction de la course (x).

4. Dispositif suivant l'une des revendications 1 à 3, caractérisé en ce que, pour soutenir au moins partiellement la colonne de produit en vrac (100), et pour diminuer les forces de frottement entre la première grille de commande (9), le bas de la colonne de produit en vrac et le caillebotis (8), lors du mouvement du premier sur le bas de la colonne de produit en vrac (100), il est prévu une grille de guidage (7) qui est munie de premiers et de seconds orifices (7.1, 7.0) répartis sur la surface de base de la colonne de produit en vrac (100) et distinés au ruissellement du produit en vrac et à l'entrée des milieux sous forme de gaz ou de vapeur (g1) arrivant par le bas.

5. Dispositif suivant l'une des revendications 1 à 3, caractérisé en ce que, sur le fond de la colonne de produit en vrac, est monté un treillis de guidage (17) horizontal ayant des lattes de treillis (17.1) faisant saillie sur chant dans la colonne de produit en vrac (100), pour empêcher tout mouvement transversal des particules en vrac (1) accouplées par coopération de frottement avec la grille de commande (9) supérieure, lors du déplacement de la grille de commande (9).

6. Dispositif suivant l'une des revendications 1 à 5, caractérisé en ce que les orifices de passage (9a, 10a) de la première et/ou de la seconde grille de commande (9, 10) sont des fentes (9a', 10a') s'étendant transversalement à la direction de la course (x).

7. Dispositif suivant l'une des revendications 1 à 5, caractérisé en ce que les orifices de passage de la première et/ou de la seconde grille de commande (9, 10) sont des rangées s'étendant transversalement à la direction de la course, d'orifices (9a, 10a; 9a1, 10a1) équidistants et alignés.

8. Dispositif suivant la revendication 7, caractérisé en ce que les orifices de passage sont des orifices circulaires (9a1, 10a1).

9. Dispositif suivant la revendication 7, caractérisé en ce que les orifices de passage sont des orifices rectangulaires (9a, 10a).

10. Dispositif suivant l'une des revendications 1 à 9, caractérisé en ce que la première grille de commande (9) et la seconde grille de commande (10) sont accouplées rigidement l'une à l'autre et sont montées en grilles de commande doubles de manière à pouvoir aller et venir en commun dans la direction horizontale de la course (x), de sorte que des chambres (80) de caillebotis, se succédant dans la direction de course, du premier groupe (8a) et du second groupe (8b), sont emplies par le haut du produit en vrac et alternativement se vident par le bas du produit en vrac, lors du déplacement horizontal de la grille de commande double.

11. Dispositif suivant l'une des revendications 1 à 10, caractérisé en ce que, considéré dans le sens de projection donné par la direction d'écoulement (z), et dans les deux positions d'extrémité de la grille de commande A et B, les parties pleines (9b) de la première grille de commande (9) coïncident en surface avec les orifices de passage (10a) de la seconde grille de commande (10), et les orifices de passage (9a) de la première grille de commande (9) coïncident en surface avec les parties pleines (10b) de la seconde grille de commande (10).

12. Dispositif suivant l'une des revendications 1 à 8, caractérisé en ce que, pour une rangée sur deux, s'étendant transversalement à la direction de la course (x), de chambres (80) du caillebotis, d'un premier groupe (8a), qui sont emplies en l'une des positions d'extrémité A de la grille de commande supérieure (9) et de la grille de commande inférieure (10), une rangée sur deux, s'étendant transversalement à la direction de course, de grilles (80) du caillebotis d'un second groupe (8b), sont voisines, considérées dans la direction de course (8), et sont vidées en la position d'extrémité A de la grille de commande supérieure (9) et de la grille de commande inférieure (10), la distance ($x_1$) des bords arrière des orifices de passage (9a) de la première grille de commande (9) ou grille de commande supérieure, c'est-à-dire la course partielle des bords arrière (14) des orifices de passage de la position A jusqu'au recouvrement de l'orifice de passage, étant au plus égale, mais de préférence inférieure, à la distance $x_2$ des bords avant des orifices de passage (10a) de la seconde grille de commande (10) ou grille inférieure, c'est-à-dire que la course partielle de ses bords antérieurs (15) d'ouverture de passage, de la position A jusqu'à une position dans laquelle l'ouverture de passage concernée n'est tout juste pas encore ouverte.

13. Dispositif suivant l'une des revendications 1 à 12, caractérisé en ce que, dans la position d'extrémité A de la grille de commande – considérée dans la direction de la course (x) – à chaque première rangée, s'étendant transversalement à la direction de la course, de chambres (80) de caillebotis d'un premier groupe (8a), qui sont remplies, fait suite au moins une seconde rangée de chambres de caillebotis intermédiaires (8c) qui est recouverte en la position d'extrémité A, vers le haut et vers le bas, par des parties pleines (9b, 10b), en ce que, à cette seconde rangée de chambres de caillebotis intermédiaires (8c) fait suite une autre rangée de chambres de caillebotis (80) du second groupe (8b) qui, en la position d'extrémité A mentionnée de la grille de commande, sont vidées, et en ce que, ensuite, vient à nouveau une rangée de chambres de caillebotis (80) du premier groupe (8a), et ainsi de suite.

14. Dispositif suivant la revendication 10, caractérisé en ce que les deux grilles de commande sont reliées, par une pièce d'ancrage, à des barres de poussée (18, 18.1, 18.2) qui sont guidées de manière étanche dans la paroi latérale adjacente de la cuve (3) et en ce qu'une manivelle de poussée (21) est accouplée positivement aux barres de poussée (18, 18.1 18.2).

15. Dispositif suivant la revendication 14, caractérisé en ce qu'une tringle de manœuvre (35) est solidaire en rotation de l'arbre (34) de la manivelle de poussée (21).

16. Dispositif suivant la revendication 14 ou 15, caractérisé en ce que, pour assurer une course complète d'un aller et retour unique, la double grille de commande (9, 10) constituée des deux grilles de commande (9, 10) un cliquet d'arrêt (39, 41) vient en prise avec l'arbre (34) de la manivelle de poussée (21), lequel cliquet qui autorise seulement un mouvement pendulaire complet de la tringle de manœuvre.

17. Dispositif suivant l'une des revendications 1 à 16, caractérisé en ce que, pour des surfaces de base de cuves ayant de grandes dimensions longitudinales, transversalement à la direction de la course (x), le caillebotis (8) et, en conséquence, les grilles de commande (9, 10), sont subdivisés, transversalement à la direction de la course, en au moins deux caillebotis partiels et grilles de commande partielles, et en ce que les grilles de commande partielles sont munie chacune d'une tige de poussée et d'une manivelle de poussée, et les manivelles de poussée sont accouplées par un arbre de manœuvre (34) commun qu'attaque la tringle de manœuvre (35).

FIG 1

FIG 2

FIG 3

FIG 4

FIG 5

FIG 6

FIG 7

FIG 8

FIG 9

FIG 10

FIG 11

FIG 13

FIG 12

FIG 14

FIG 15

FIG 16

FIG 17

FIG 18

FIG 19

FIG 20

EP 0 225 475 B1